# DEMANDE DE BREVET EUROPEEN

(11) **EP 2 932 954 A1**
(43) Date de publication de la demande: **21.10.2015**
(21) Numéro de dépôt: 14164875.8
(22) Date de dépôt: 16.04.2014
(51) Int. Cl.: A61H 3/04, B62K 3/02, B62K 3/16

(54) **Utilisation d'un vérin pneumatique comme tige de selle**

(71) Demandeur: Roditi, David, 66000 Perpignan (FR)
(72) Inventeur: Roditi, David, 66000 Perpignan (FR)

(57) **Abrégé**

L'invention concerne un dispositif sur roues, particulièrement adapté aux personnes à mobilité réduite. Le faible encombrement du dispositif permet une utilisation sur un trottoir, sur le quai d'une gare ou à l'intérieur d'un magasin.

Le problème principal d'un tel dispositif est que la selle doit être basse pour faciliter l'accès et assurer une assise confortable, et relativement haute pour avancer en poussant sur le sol avec les pieds.

La solution trouvée est l'utilisation d'un vérin pneumatique comme tige de selle. Cette invention est caractérisée par les liens entre le cadre du dispositif (2 et 3), le vérin pneumatique (4 et 5), et la selle (8). Ces liens sont assurés par friction sous le poids de l'usager. L'usager peut modifier la hauteur de la selle suivant les besoins, en soulevant un levier (9) facilement accessible entre ses jambes.

## Description

La présente invention concerne un dispositif de mobilité sur roues destiné à aider les personnes qui se fatiguent rapidement en restant debout. L'invention se greffe sur des équipements bien connus, comme la draisienne, la bicyclette ou le tricycle afin de rendre leur utilisation plus aisée.

La technologie de la draisienne, la bicyclette et le tricycle s'est développée pendant près de deux siècles. Actuellement les nombreuses versions sont déclinées pour la plupart des usages: modèles urbains, tout terrain ou compétition, et pour la plupart des usagers: homme, femme, enfant ou sportif. Cependant, les personnes d'un certain âge ont un problème d'équilibre sur une bicyclette, et ne peuvent pas s'asseoir sur la selle d'un tricycle facilement car il faut enjamber le cadre. De plus, ces équipements sont trop volumineux pour rouler sur un trottoir, sur le quai d'une gare ou à l'intérieur d'un magasin. Le dispositif selon l'invention offre une réponse à ces inconvénients.

Le point du départ de cette invention est la draisienne, ou la bicyclette sans pédales qu'on fait avancer en poussant le sol avec ses pieds. Inventée en 1817 par le Baron Von Drais, les seuls modèles encore commercialisés sont destinés aux jeunes enfants qui n'ont pas l'équilibre nécessaire pour monter sur une vraie bicyclette avec pédalier. En effet, avec un pied et deux roues par terre, on est toujours en équilibre sur une draisienne.

La présente invention concerne la refonte de la draisienne pour s'adapter aux besoins de personnes adultes, qui peuvent ressentir un problème d'équilibre ou de fatigue en restant debout. D'abord, l'encombrement du dispositif a été réduit afin de permettre une utilisation sur un trottoir ou sur un plancher intérieur, et ensuite, la selle a été conçue pour être facilement accessible et confortable à l'usage. Le problème principal est que la selle doit être basse pour accéder par derrière et pour s'asseoir sans se mettre en déséquilibre, et relativement haute pour avancer en poussant sur le sol avec ses pieds. De plus, l'usager doit être capable de changer la hauteur de la selle à tout moment sans quitter la position assise sur la selle.

Le dispositif selon l'invention prévoit que la selle soit attachée sur un vérin pneumatique à gaz, que l'usager peut faire monter ou descendre suivant les besoins. Ceci demande :
- que le cadre de l'appareil soit muni d'un support pour tenir le vérin pneumatique comme tige de selle.
- que la selle soit conçue pour s'attacher au vérin pneumatique de telle manière que l'usager puisse modifier la hauteur grâce à un levier facilement accessible.

L'avantage du dispositif selon l'invention, par rapport à d'autres supports pneumatiques pour les selles de bicyclette, est la simplicité de fixation. En effet, les liens entre le cadre et la partie basse du cylindre du vérin pneumatique, ainsi que les liens entre la partie haute du piston du vérin pneumatique et la selle, sont assurés par friction sous le poids de l'usager. Le vérin pneumatique sert de tige de selle sans autres intermédiaires entre le cadre et la selle.

Les dessins annexes illustrent l'invention :

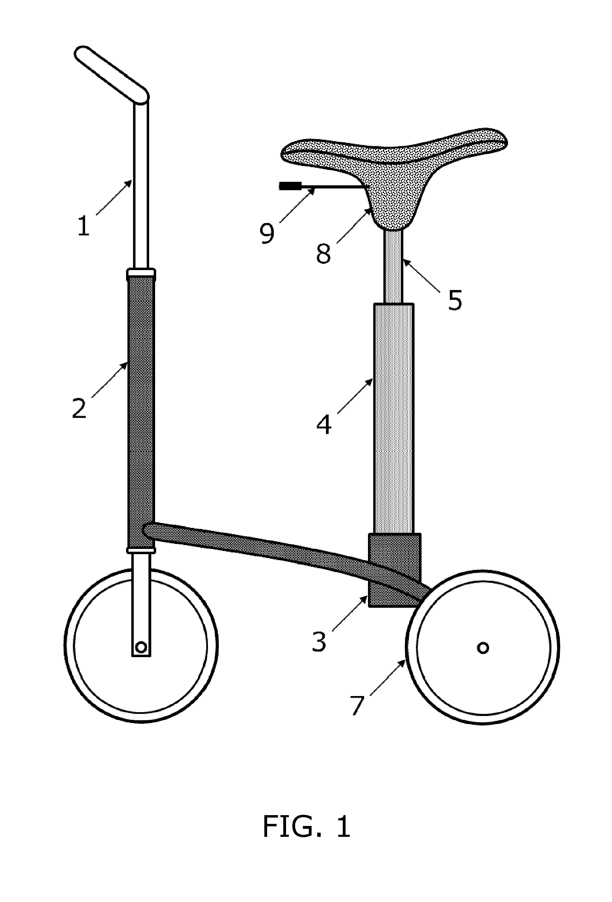

La Figure 1 représente une vue de face du dispositif suivant l'invention.

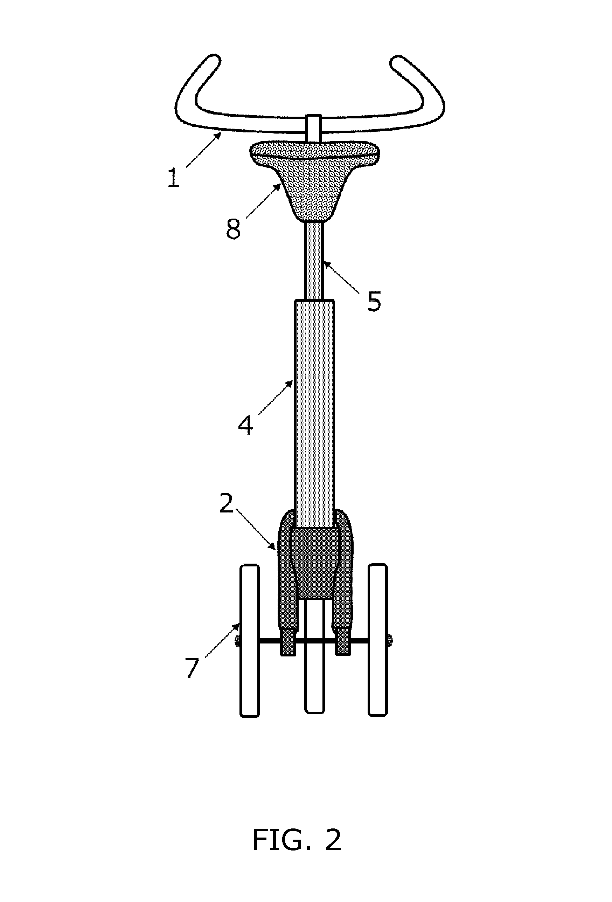

La Figure 2 représente une vue arrière du dispositif suivant l'invention.

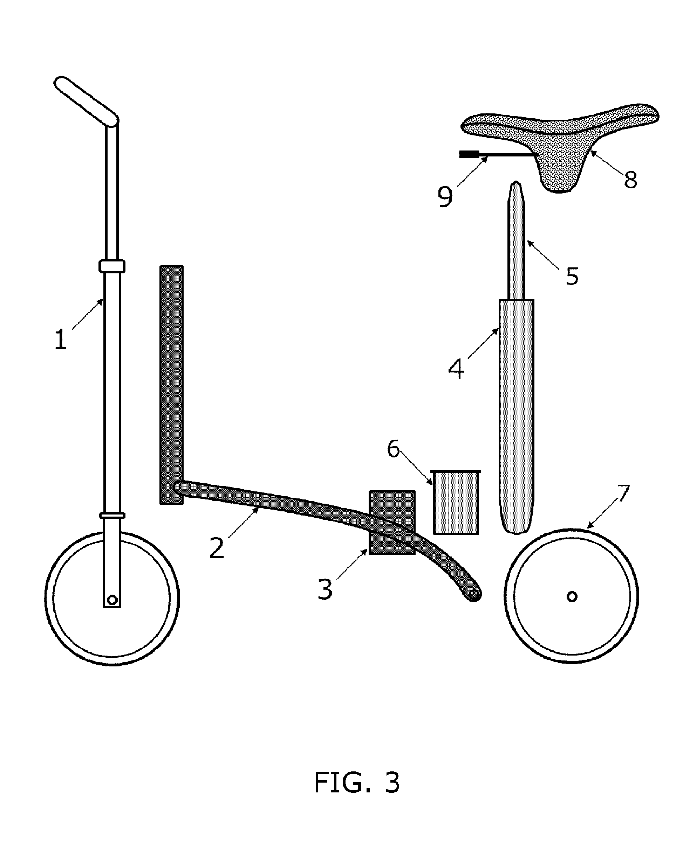

La Figure 3 représente une vue éclatée des composants du dispositif suivant l'invention.
La Figure 4 représente une coupe schématique de la partie basse du vérin pneumatique tenu dans le récipient attaché au cadre.
La Figure 5 représente une coupe schématique de la selle placée sur la partie haute du piston du vérin pneumatique.
La figure 6 représente une personne debout derrière le dispositif suivant l'invention avec la selle en position basse.
La Figure 7 représente une personne assise sur le dispositif selon l'invention avec la selle en position basse.
La Figure 8 représente une personne assise en équilibre sur le dispositif selon l'invention avec la selle en position haute.
La Figure 9 représente une personne assise sur le dispositif selon l'invention, en train d'avancer avec la selle en position haute.

En référence à ces dessins le dispositif comporte une colonne de direction (1) avec une roue avant, un cadre (2) avec un récipient (3) comme support pour un vérin pneumatique à gaz (4), et une ou deux roues arrière (7). Le vérin pneumatique sert comme tige de support pour la selle (8).

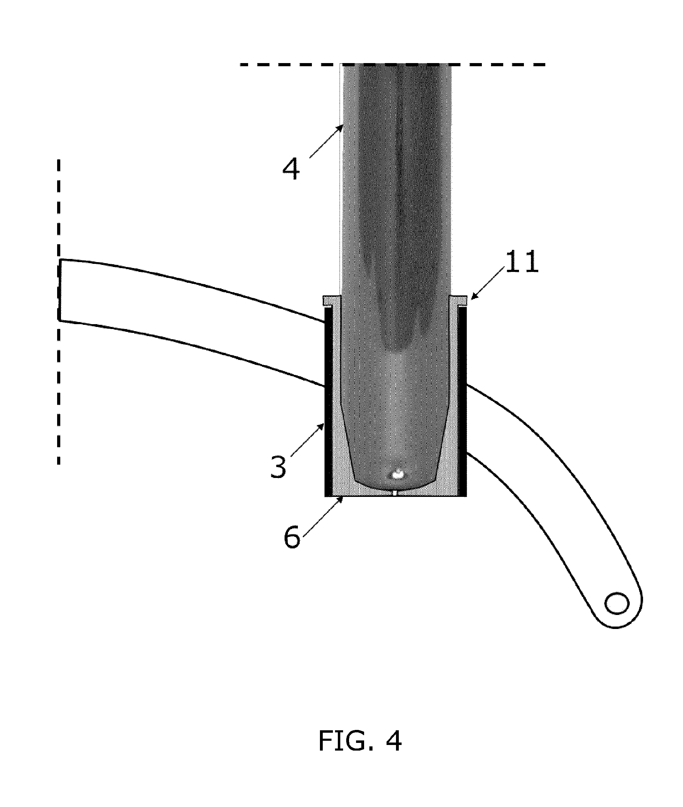

Selon la Figure 4, le récipient destiné au vérin pneumatique fait partie du cadre métallique du dispositif, cependant le vérin pneumatique est tenu en position verticale stable grâce au fourreau (6) en matière plastique, qui est logé à l'intérieur du récipient (3). La forme du fourreau est conçue pour s'ajustée à la partie basse du vérin pneumatique afin de le tenir fermement. Une avancé circulaire (11) sur la partie haute du fourreau est conçue pour reposer sur le bord du récipient (3).

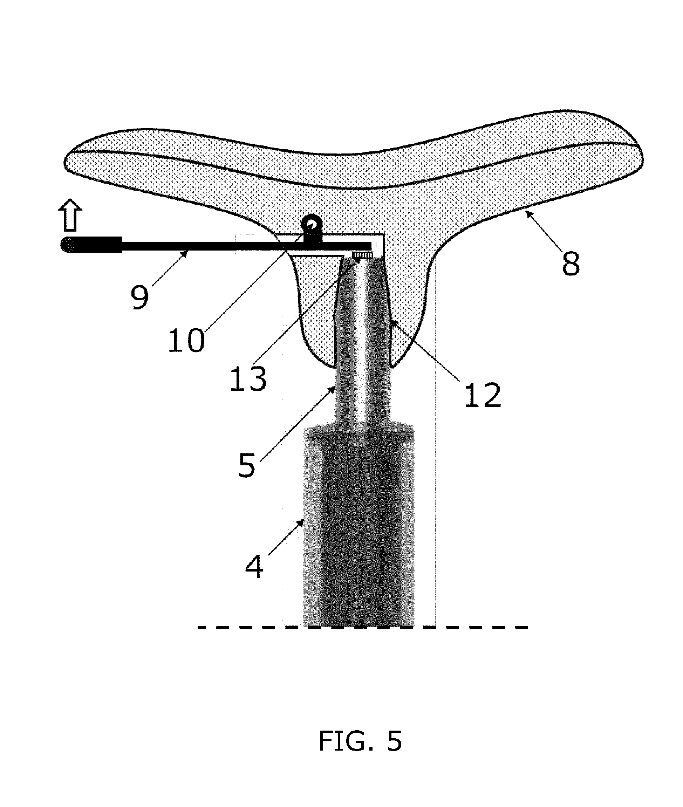

La selle (8), selon la Figure 5, est moulée en matière plastique avec une ouverture en partie basse (12) qui est conçue pour s'ajuster à la partie haute du piston (5) du vérin pneumatique.

Un levier (9) est conçu pour pivoter, sur un axe horizontal (10) aménagé à l'intérieur de la selle. Le mouvement du levier exerce une pression sur le bouton (13) en haut du piston (5). La pression sur ce bouton libère le piston du vérin pneumatique et permet le réglage de la hauteur de la selle. Quand l'usager est assis sur la selle, le levier se trouve entre ses jambes. En soulevant le levier, l'usager peut modifier la hauteur de la selle sous le poids de son corps.

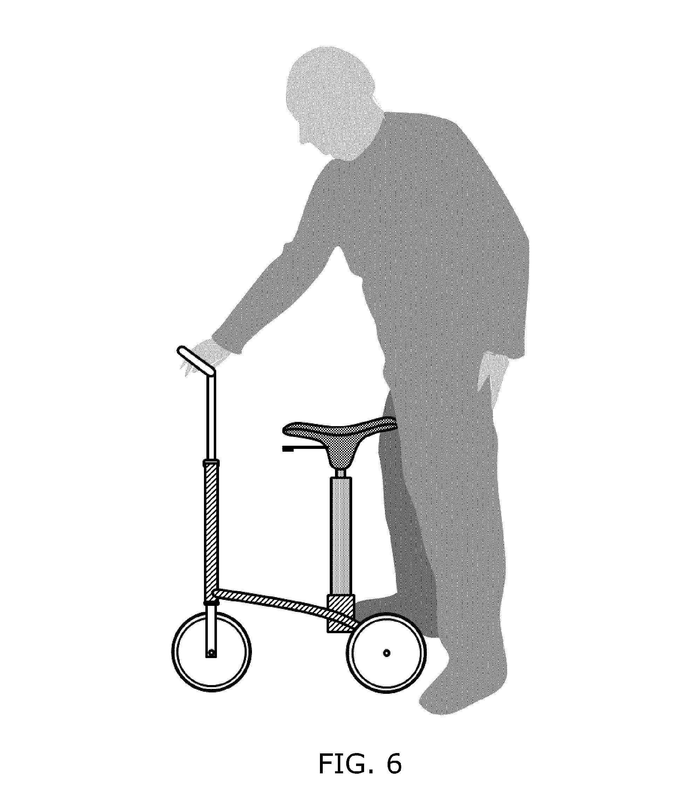

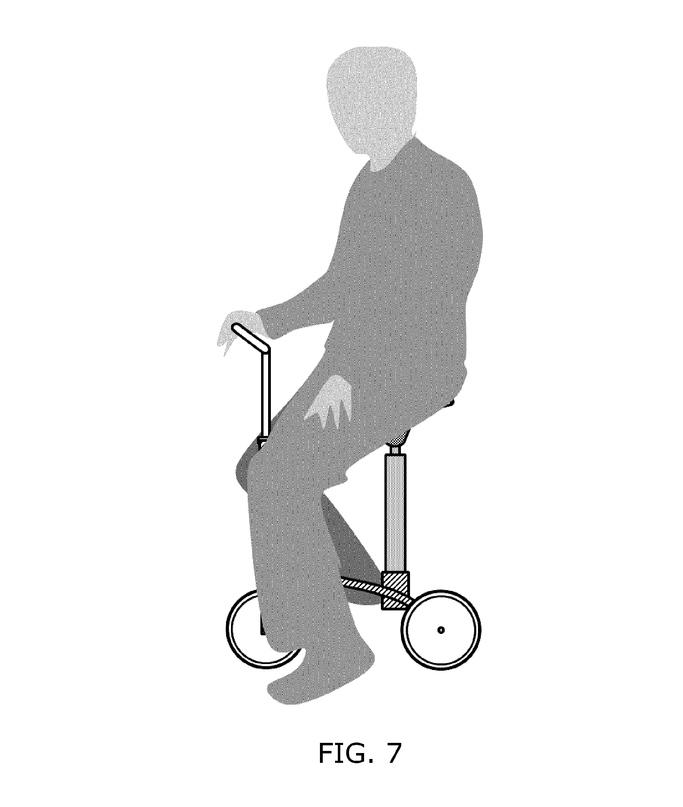

Selon les Figures 6 et 7, le dispositif est stationnaire et stable avec la selle en position basse. Dans ce cas, on peut se placer sur la selle par derrière et s'asseoir confortablement en attente.

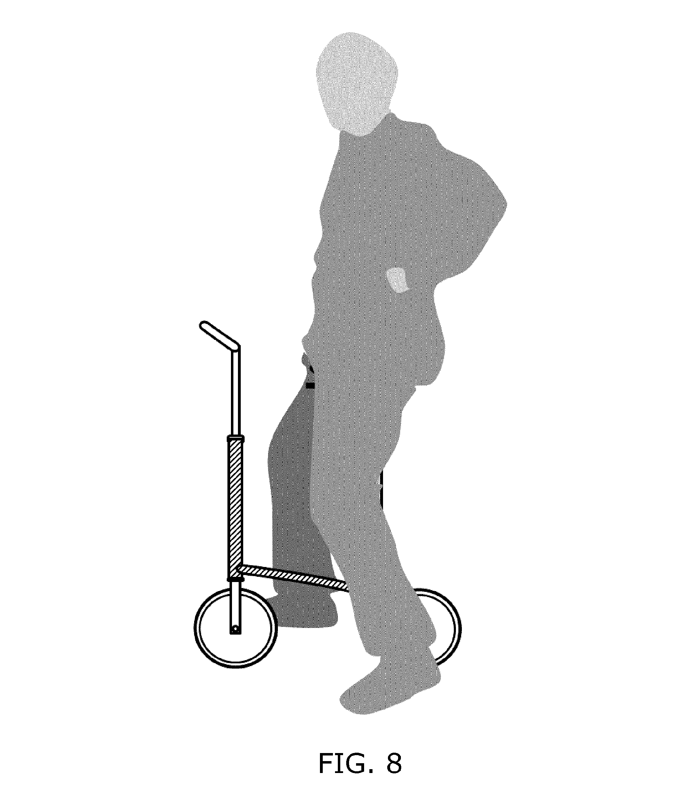

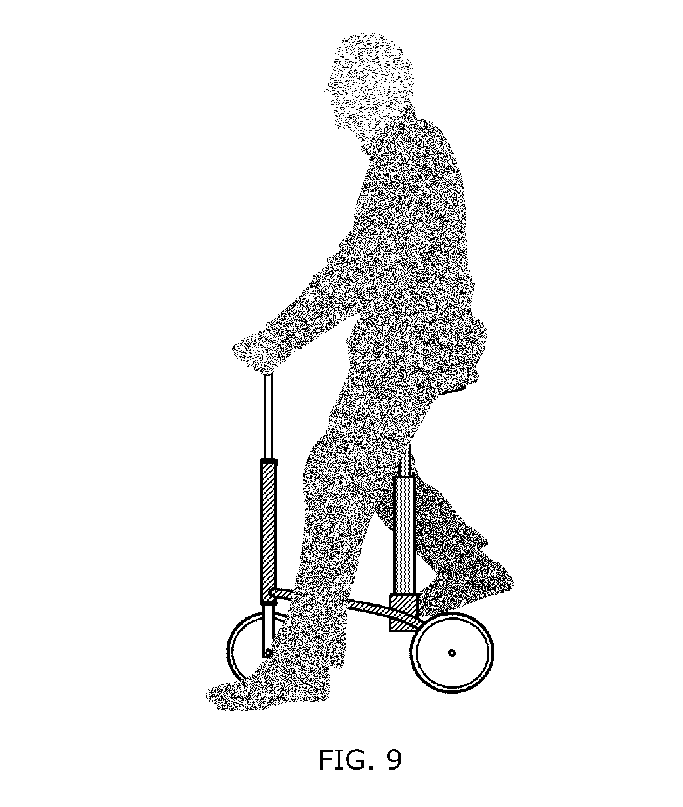

En se mettant debout et en soulevant le levier entre les jambes, la selle se lève automatiquement et se place à la hauteur voulue. Selon les Figures 8 et 9, la selle est en position haute. Ainsi, il devient très facile à déplacer les jambes de chaque côté du dispositif afin d'avancer en poussant avec les pieds sur le sol. Cependant, on peut faire une pause à tout moment, assis en équilibre avec les deux pieds par terre.

Les figures montrent un appareil de mobilité sans pédales avec une roue devant et deux en arrière, cependant le dispositif selon l'invention pourrait servir pour d'autres types d'appareils : avec pédales, avec moteur, ou avec d'autres configurations des roues.

Le dispositif selon l'invention est particulièrement destiné au déplacement en ville pour des personnes à mobilité réduite. Il est adapté aux trajets de courte distance et permet une attente assise. Par exemple : faire les courses, visiter un parc ou une exposition, attendre un bus ou un train, discuter avec des voisins dehors sans fatigue. L'utilisation pour la rééducation à la mobilité physique est également envisagée.

## Revendications

1. Dispositif pour la mobilité des personnes qui comporte une colonne de direction (1) avec une roue avant, un cadre (2), et une ou deux roues arrière. Le cadre du dispositif est **caractérisé par** l'inclusion d'un récipient (3) qui est conçu pour tenir un vérin pneumatique (4) comme tige de selle.

2. Le dispositif selon la revendication 1 **caractérisé par** un fourreau (6) ajusté aux dimensions et formes du récipient (3) et de la partie basse du vérin pneumatique (4). Le fourreau à l'intérieur du récipient, aménagé dans le cadre, est conçu pour tenir le vérin pneumatique en position verticale stable. La fixation est assurée par friction sous le poids de l'usager.

3. Le dispositif selon la revendication 2, où le fourreau (6) est **caractérisé par** une avancé circulaire (11) qui repose sur le bord du récipient.

4. Le dispositif selon la revendication 1 **caractérisé par** une selle (8) avec une ouverture aménagée en partie basse (12) qui épouse la partie haute du piston (5) du vérin pneumatique afin de tenir la selle en place. La fixation est assurée par friction sous le poids de l'usager.

5. Le dispositif selon la revendication 4 **caractérisé par** un levier (9) qui pivote sur un axe horizontal (10) tenu dans le corps de la selle.

6. Le dispositif selon la revendication 5 **caractérisé par** la position du bras du levier, en ce qu'il se trouve devant la selle et entre les jambes d'un usager assis.

7. Le dispositif selon la revendication 6 **caractérisé par** l'action du bras de levier en ce que son soulèvement par l'usager fait pression sur le bouton (13) en partie haute du piston du vérin pneumatique afin de régler la hauteur du piston et ainsi modifier la hauteur de la selle sous le poids du corps de l'usager.

8. Le dispositif selon la revendication 1 **caractérisé par** l'utilisation du vérin pneumatique comme tige de selle sans autre intermédiaire entre le cadre avec son fourreau, et la selle.
